# EUROPÄISCHE PATENTSCHRIFT

(11) **EP 2 245 514 B1**
(45) Veröffentlichungstag und Bekanntmachung des Hinweises auf die Patenterteilung: **25.07.2012**
(21) Anmeldenummer: 09712870.6
(22) Anmeldetag: 20.02.2009
(51) Int. Cl.: G05B 19/05, H04L 29/08

(54) **SERVICEORIENTIERTES AUTOMATISIERUNGSGERÄT SOWIE VERFAHREN ZUR SPEZIFIZIERUNG EINES SERVICEORIENTIERTEN AUTOMATISIERUNGSGERÄTS**
SERVICE-ORIENTED AUTOMATION DEVICE AND METHOD FOR SPECIFYING A SERVICE-ORIENTED AUTOMATION DEVICE
APPAREIL D'AUTOMATISATION ORIENTÉ SERVICE ET PROCÉDÉ DE SPÉCIFICATION D'UN APPAREIL D'AUTOMATISATION ORIENTÉ SERVICE

(30) Priorität: 22.02.2008 DE 102008002782
(43) Veröffentlichungstag der Anmeldung: 03.11.2010
(73) Patentinhaber: SCHNEIDER ELECTRIC AUTOMATION GMBH, 63500 Seligenstadt (DE)
(72) Erfinder: COLOMBO, Armando, Walter, 63791 Karlstein (DE); MENDES, Joao, Marco, P-4990-162 Ponte de Lima (PT)
(74) Vertreter: Stoffregen, Hans-Herbert
(86) Internationale Anmeldenummer: PCT/EP2009/052085
(87) Internationale Veröffentlichungsnummer: WO 2009/103811

(56) Entgegenhaltungen:
- US-B1- 7 151 966
- MENDES ET AL: "Behaviour and integration of service-oriented automation and production devices at the shop-floor" 1. Juli 2008 (2008-07-01), 4TH I*PROMS VIRTUAL INTERNATIONAL CONFERENCE, 2008, PAGE(S) 1 - 6 , XP002529639 [gefunden am 2008-07-01] das ganze Dokument
- FRANCOIS JAMMES AND HARM SMIT: "Service-Oriented Paradigms in Industrial Automation" IEEE TRANSACTIONS ON INDUSTRIAL INFORMATICS, Bd. 1, Nr. 1, 1. Februar 2005 (2005-02-01), Seiten 62-70, XP002532819
- PAULO LEITAO ET AL: "Petri net based Methodology for the Development of Collaborative Production Systems" 1. September 2006 (2006-09-01), EMERGING TECHNOLOGIES AND FACTORY AUTOMATION, 2006. ETFA '06. IEE E CONFERENCE ON, IEEE, PI, PAGE(S) 819 - 826 , XP031082669 ISBN: 978-0-7803-9758-3 Seite 820, linke Spalte, letzter Absatz - Seite 825, rechte Spalte, letzter Absatz
- FRANCOIS JAMMES AND HARM SMIT: "Service-Oriented Architectures for Devices-the SIRENA View" 3RD IEEE INTERNATIONAL CONFERENCE ON INDUSTRIAL INFORMATICS, 10. August 2005 (2005-08-10), XP002532820

## Beschreibung

Die Erfindung bezieht sich auf ein Verfahren zum Betrieb von autonomen, kollaborativen serviceorientierten Automatisierungsgeräten nach dem Oberbegriff des Anspruchs 1.

Ein Verfahren der eingangs genannten Art ist in der Druckschrift F. Jammes u. a.: "Service-oriented Paradigms in Industrial Automation", IEEE Transactions on Ind. Informatics, Vol. I, No. 1, Februar 2005, beschrieben. In dem Aufsatz wird der Einsatz serviceorientierter Architekturen für Produktionssysteme beschrieben. Funktionen von Automatisierungsgeräten bzw. von mit den Automatisierungsgeräten verbundenen Produktionsgeräten werden als Services bereitgestellt und können von Automatisierungsgeräten sowohl auf der Ebene der Fertigungsstätte als auch durch höhere Ebenen wie IT-Unternehmenssysteme aufgerufen werden. Auch wird die Möglichkeit der Aggregation von Services sowie einer ereignis-basierten Kommunikation zwischen den Automatisierungsgeräten angesprochen.

In der US-B-7,151,966 ist ein System und ein Verfahren zur Bereitstellung virtueller und entfernter-Interaktionen zwischen Komponenten in einem industriellen Steuerungsnetzwerk beschrieben. Eine oder mehrere Komponenten des industriellen Steuerungssystems sind als Web-Service definiert, wobei die Komponenten kooperieren, um verteilte Steuerungsfunktionalitäten in den gescannten Teilen eines virtuellen Funktions-Frameworks zu unterstützen. Die Komponenten können z. B. Datenverarbeitung, Steuerungslogik, I/O und Statuskomponenten eines industriellen Steuerungssystems umfassen. Standardisierte und allgemein erhältliche Interfaces beschreiben Controller-Funktionalitäten als Services, wobei Controller-Anwendungen über die Komponenten und assoziierte Interfaces konstruiert werden. Dies kann das Auffinden, von anderen zugehörigen Services und Anwendung von üblichen Web-Protokolls zur Kommunikation zwischen den Services einschließen.

Der vorliegenden Erfindung liegt die Aufgabe zu Grunde, ein Verfahren der eingangs genannten Art derart weiterzubilden, dass beim. Ablauf eines Arbeitsplanes zur Herstellung eines Produktes auftretende unvorhergesehene Ereignisse und/oder lokale Konflikte unter Services behoben werden, um die Flexibilität des Produktionssystems zu verbessern.

Die Aufgabe wird erfingdungsgemäß durch die Merkmale des Anspruchs 1 gelöst.

Die Idee beschreibt einen Ansatz sowie das zugehörige Verfahren, welches hinter dem funktionsfähigen Verhalten von autonomen und kollaborativen Automatisierungsgeräten in Fertigungsstätten mit serviceorientierter Architektur (SoA) steht. Bezüglich des Kontextes fokussiert die Idee auf Set-up- und Betriebsphasen in dem Lebenszyklus von kollaborativen SoA-basierten Produktionssystemen. Diese Systeme sind aus verteilten, rekonfigurierbaren intelligenten Produktionsautomatisierungsgeräten zusammengesetzt, die ihre Funktionalität als Services oder Aggregation dieser darlegen.

Der Ansatz/das Verfahren ermöglicht, nach anfänglichem Set-up der automatischen Funktion des Gerätes und der Darlegung deren Services, die kollaborative Interaktion/Kooperation, um flexible und kundenspezifische workflows, welche mit dem herzustellenden Produkt verbunden sind, zu verfolgen. Unter dem Dach des serviceorientierten Architektur-Paradigmas verhalten sich die von den Produktionsgeräten bereitgestellten orchestrierten Services als
- lateral/horizontal (Gerät-Gerät) Beziehung. Aufrufen von Services oder Unterhaltung mit Services, wie z. B. bewege-Palette-ein-, nehme-Greifer, transportiere-Palette-auf, usw.
- vertikal (Gerät-MES (Manufacturing Execution System) und Geräte-DMS (Decision-Making-Systems) Beziehung. Aufrufen von Services, welche von höheren Komponenten höheren Levels für dynamische Umorganisation von Produktions-/Automatisierungsanfragen angeboten werden, Unterhalten mit Services wie Überwachung /Diagnose Information /Indizes, usw..

Das Verfahren beschreibt das autonome Verhalten von serviceorientierten Produktionsautomatisierungsgeräten in der Fertigungsstätte und als Teil eines IT-Unternehmenssystems. Die Geräte haben einen Grad von Autonomität im Sinne von selbsttragfähiger Steuerung und Darlegung von notwendigen Services zur Ermöglichung lateraler/horizontaler Kollaboration mit anderen Geräten (Aggregation von Services), Anfrage/Bereitstellung von Services für entscheidungsfällende Information von MES/DMS und Integration. Sämtliche Interaktionen und Ressource-Zugriffe finden über Service-Orientierung statt. Es existiert eine "loose-coupling"-Vererbung in Form einer bottom-up-Perspektive (von den Geräten/Fertigungsstätten-Level), welche die Autonomität und konsequente Rekonfigurationseigenschaften steigert.

Wenn die Fertigungsstätte in eine SoA-Architektur abgebildet ist, ist das Verhalten jedes intelligenten Produktionsautomatisierungsgerätes ein Teil einer Middleware-Hülle, welche formal spezifiziert ist durch z. B. High Level Petri Net (HLPN)-Modelle und durch Routinen zur Behandlung undokumentierter Ereignisse unterstützt wird und über gegenwärtige Konflikte im Verhalten des Gerätes entscheidet.

Das funktionsfähige Verhalten dieser Geräte folgt der "Marken-Bewegung" (Token-Game: dynamische Änderung von Netz-Marken gemäß Petri-Netz-Regeln. Die Änderung erfolgt durch die Bewegung von Marken (token) zwischen Plätzen, welche durch die Initiierung von Transitionen erzeugt werden) des HLPN; es ist dann selbststeuernd bzw. selbstüberwachend und wird durch interne/externe Ereignisse geführt, welche die Hülle mit anderen Komponenten der SoA verbinden. Diese Ereignisse können ebenfalls mit Serviceaufrufen korrespondieren.

Die Anwendung dieses Verfahrens resultiert in autonomen Geräten, die selbststeuernd bzw. selbstüberwachend sind und weniger Abhängigkeiten von anderen Komponenten haben, insbesondere von oberen Levels, wie z. B. entscheidungsfällenden Systemen. In Kurzform sind die Merkmale dieser Geräte:
- serviceorientierung, ereignisbasierende Entwicklung den Regeln des "token-game" eines HLPN folgend;
- autonome Steuerung und konsequentes Verhalten;
- ereignisbasierter Lebenszyklus folgt den Regeln von z B. "token-game" eines HLPN;
- Handhabung von dokumentierten Ereignissen und Ausnahmen der üblichen Steuerung;

Das Ziel des Patent-Vorschlags ist die Zurverfügungstellung der Formalisierung des Betriebsverhaltens von autonomen und kollaborativen Automatisierungsgeräten in Fertigungsstätten mit serviceorientierter Architektur (SoA).
Die folgenden Themen fassen die anfänglichen Vorteile der Anwendung der Idee zusammen:
- eine von einem Produktionsautomationsgerät ausgeführte Operation ist ein Service, der von dem Gerät angeboten wird und der von anderen Geräten der Fertigungsstätte oder von anderen Komponenten des SoA-basierten IT-Untemehmenssystems aufgrund der kollaborativen Beziehungen aufgerufen werden kann. Die Topologie der SoA-basierten Fertigungsstätte erlaubt Aufruf von Services unter Beachtung "Reservierung von Resourcen" (allocation of resources), mitbenutzte Ressourcen (shared resources), begrenzter Mechatronik und Informationsleistungs-Spezifikationen.

Jedes Gerät hat ein autonomes SoA-basiertes Steuerungsverhalten, welches lokal in dem Gerät ist, welches jedoch verbunden ist zu anderen Geräten, basierend auf der Layout-Konfiguration der Fertigungsstätte. Die Middleware-Hülle erstellt diese möglichen Verhaltensverbindungen basierend auf der Bereitstellung/dem Aufruf von Services.

Entscheidungsmechanismen, welche mit dem Verhalten von aggregierten Services assoziiert sind, sind lokal zu den Nachbargeräten, können aber ebenfalls von Informationen beeinflusst werden, die mit dem gesamten System verbunden sind, einschließlich Fertigungsstätte (laterale Kollaboration) und Komponenten höheren Levels (vertikale Kollaboration) des SoA-basierten IT-Untemehmenssystems.

Das komplette Verhalten der Fertigungsstätte basiert auf asynchronem Austausch von Ereignissen und Aufruf von Services ausgeführt durch intelligente verteilte Geräte, und dieses Verfahren folgt formal dem "token-game" des HLPN-basierten SoA-basierten Modells.

Diese Möglichkeit, welche von der SoA-basierten Fertigungsstätte angeboten wird, nämlich den Arbeitsablauf basierend auf lokalen Konflikten unter Services, welche den assoziierten Mechatronikgeräten (Produktionsautomatisierungsgerät) zugeordnet sind, zu managen, verbessert enorm die Flexibilität des Produktionssystems. Dynamische Reorganisationseigenschaften sind systemimmanent und ermöglichen die Bearbeitung von vielen unterschiedlichen Typen von Produkten zur selben Zeit ohne Reprogrammierung von Controllern und/oder Warten auf eine komplette Reorganisation der Produktion.

Basierend auf einem mit dem Produkt verbundenen Arbeitsablauf, können Konfliktsituationen in der Fertigungsstätte durch Aufruf von notwendigen Services, die durch eine DMS- oder eine MES-Komponente angeboten werden, gelöst werden. Zu jeder Zeit, wenn eine Entscheidung gefällt wird, wird ein Service aus einem Set von möglichen ausführbaren Services aufgerufen. Stets wenn der Service ausgeführt ist, wird ein neuer lokaler Status von dem Gerät erreicht und die korrespondierende Markierung des HLPN wird entwickelt. Anmerkung: Die Token-Bewegung in dem HLPN repräsentiert z. B. logische Information verbunden mit der Fertigungsstätten-Topologie (SoA Middleware) und/oder physikalische Informationen verbunden mit der Palette/Produkt-Bewegung in der Fertigungsstätte.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: ein Konzept des unabhängigen Verhaltens von autonomen Komponenten/serviceorientierten Automatisierungsgeräten,
- Fig. 2: eine schematische Darstellung eines Aufzugs mit möglichen Pfaden/Betriebsmodi,
- Fig. 3: ein Verhaltensmodell für den Aufzug mit möglichen Betriebsmodi,
- Fig. 4: Aktivierung und Betrieb des Services "oben-links-Übergabe-ein" gemäß Fig. 3 und
- Fig. 5: eine Konfliktsituation, in welcher Konflikt 3 der aktuelle Status des Modells nach Fig. 3 ist.

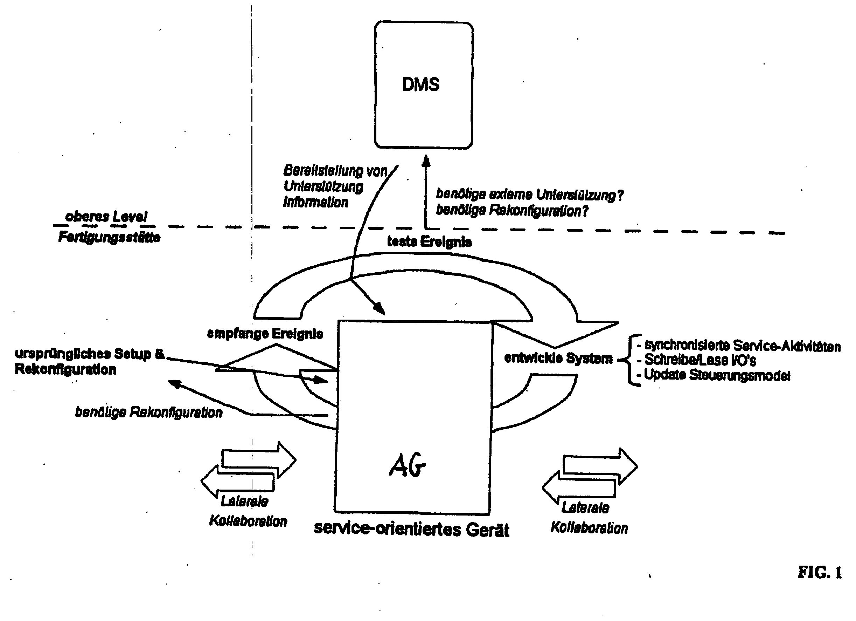

Fig. 1 zeigt ein Konzept des unabhängigen Verhaltens von autonomen Automatisierungsgeräten AG bzw. Komponenten, wobei mehrere Prozeduren für den Lebenszyklus des Betriebsverhaltens dieser Komponenten definiert sind:
- ursprüngliches Setup des Gerätes AG, einschließlich Konfiguration, Darlegung von Services, Etablierung von Verbindungen zu anderen Geräten/Komponenten und Übergabe dieser an wartenden ursprünglichen Status.
- Ereignisse werden über Service-Operationen empfangen, interne Geräte-Interfaces zu I/O und unmittelbar durch die Steuerung (z. B. von Konflikten) generiert.
- Das empfangene Ereignis muss getestet werden:
   - wenn dieser mit einer Beschreibung des aktuellen Status des Steuerungsmodells korrespondiert, dann ist das System durch updating des Steuerungsmodells, Synchronisierung von Service-Aktivitäten (z. B. Interaktion mit anderen Geräten wie Trage-Palette, Nehmer-Greifer), Schreib/Lese zu I/O, berichte Diagnose/Überwachungsindizes zu entwickeln.
   - im Falle einer Ausnahme, und eines undokumentierten Ereignisses oder eines internen Konflikts sind einige Entscheidungen erforderlich. Wenn das Gerät die notwendigen Informationen zur Lösung dieser hat, werden spezielle Verfahren verwendet, um in die normale Systemsteuerung einzugreifen und es werden neue Ereignisse generiert. In dem Fall, wenn nicht ausreichende Kontrolle über das Ereignis herrscht, kann das Gerät nach Services anfragen, die von externen Komponenten der SoA (z. B. DMS) bereitgestellt werden, um besser geeignete Informationen für eine konkrete Entscheidung über das Problem bereitzustellen. Als Beispiel soll eine Palette transportiert werden und es existieren zwei Möglichkeiten und erlaubte Bahnen, z. B. zwei Services bereitgestellt durch die Middleware: Bewege-ein oder bewege-auf. Beide Services sind in beiderseitiger Ausschluss-Beziehung, z. B., beide werden von dem Gerät angeboten, jedoch nur einer kann letztendlich aktiviert werden und arbeiten. Die Entscheidung wird durch eine DMS-Komponente bedient (diese kann im oberen Level des SoA-basierten IT-Untemehmenssystems oder integriert in einigen der Geräte in der Fertigungsstätte angeordnet sein), welche ein Ausführ-Ereignis (habilitation event) an den ausgewählten Service und ein Sperr-Ereignis (inhibition event) an den anderen sendet,
   - nach Ausführung des Ereignisses und Entwicklung folgt das "token-game" der Modell-basierten Middleware-Hülle, wobei das System den nächsten Zustand erreicht und es erneut fähig ist, andere Ereignisse zu empfangen.

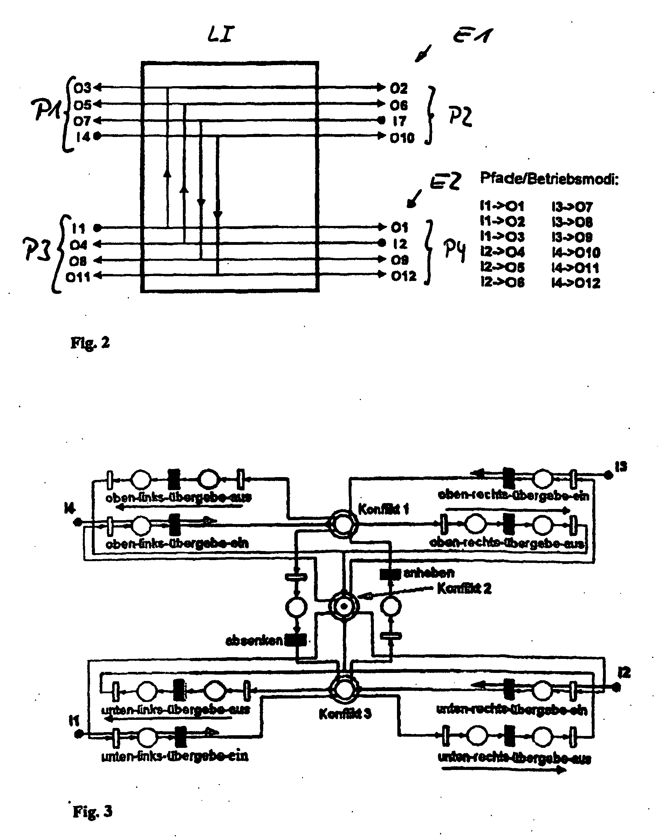

Das Verfahren wird auf ein Mechatronik-Gerät LI angewendet, welches mit einem Aufzug mit zwei Ebenen E1, E2 und vier unterschiedlichen Ports P1, P2, P3. P4 korrespondiert, in die Paletten P ein- und ausgeführt werden können. Diese Ports P1, P2, P3. P4 sollten zur Verbindung mit anderen Geräten AG verwendet werden, wie beispielsweise Förderbändern, können jedoch auch manuell durch Eingabe einer Palette P in den Aufzug (wenn ein Sensor dies detektiert) getriggert werden. Fig. 2 zeigt eine Darstellung des Aufzugs LI mit allen 12 möglichen erwarteten Betriebsmodi (die zu den Pfaden korrespondieren, die eine Palette aufnehmen kann), und die in einer SoA-basierten Spezifikation als 12 aggregierte Services dargestellt sind.

Die verhaltensmäßige Steuerung des Aufzugs LI ist formal repräsentiert durch ein erstes High-Level Petri Netz Modell, welches die globale Betriebsweise in verschiedenen Modi zeigt (Fig. 3).

Es ist zu beachten, dass aufgrund der mechatronischen Einschränkungen nur eine Palette P von dem Aufzug LI aufgenommen werden kann.

Die blauen und größeren Boxen (Transitionen des HLPN-Modells) stellen eine komplexe Operation dar (wie beispielsweise einen Service-Aufruf). Diese können atomare Services sein, die durch mechatronische Komponenten des Aufzugs LI oder Aggregation von anderen atomaren Services bereitgestellt werden (In diesem Fall können diese separiert werden, um einen tieferen Einblick in die Verhaltenssteuerung zu erlangen). Betrachtet man den komplexen Service/Betriebsmodus I4-O12, resultiert dieser Service aus der Aggregation von den folgenden Services (top-left-transfer-in + lift-down + bottom-right-transfer-out).

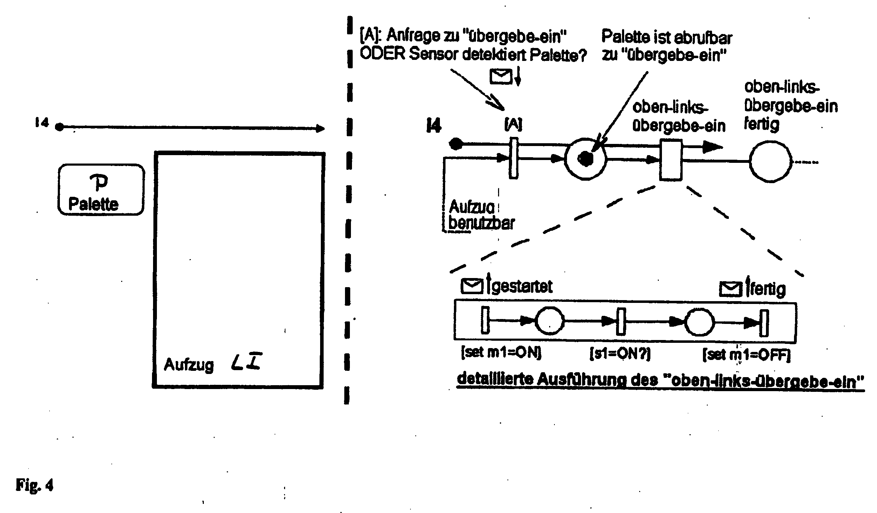

Der atomare Service "top-left-transfer-in" (s. Fig. 4) impliziert Produktionsautomatisierungsoperationen verbunden mit Lesen/Schreiben zu korrespondieren I/O und Synchronisierung der Service Aktivität (z. B. ein Förderband fragt diesen Service an). Die Aktivierung dieser Transition wird ausgeführt, wenn: 1) das Modell einen logischen Status "true" zeigt (Aufzug ist bereit, einen Service anzubieten), z. B. der Aufzug ist verfügbar und 2) wenn ein Förderband den Service anfragt oder ein Sensor eine Palette in dem Port detektiert.

Andere Situationen, die nicht dokumentiert sind, können ebenfalls behandelt werden und benötigen spezielle Prozeduren, wie zuvor beschrieben.

"Obergebe-aus"-Operationen (wie z. B. die "top-right-transfer-out"-transition sollten synchron mit verbundenen Übergabegeräten (beispielsweise Förderband) ausgeführt werden, um imstande zu sein, eine gleichmäßige Übergangsbewegung der Palette P von einem Gerät zu dem anderen zu gewährleisten. Dies erfordert, dass der Aufzug LI einen "Transfer-In-Service" des verbundenen Förderbandes anfragt.

Nach dem anfänglichen Setup und der Konfiguration des Gerätes AG mit dem Steuerungsmodell und zusätzlichen Routinen ist das Gerät benutzbar, um Services zu offerieren/darzustellen und erwartet Ereignisse und Aufrufe von Services.

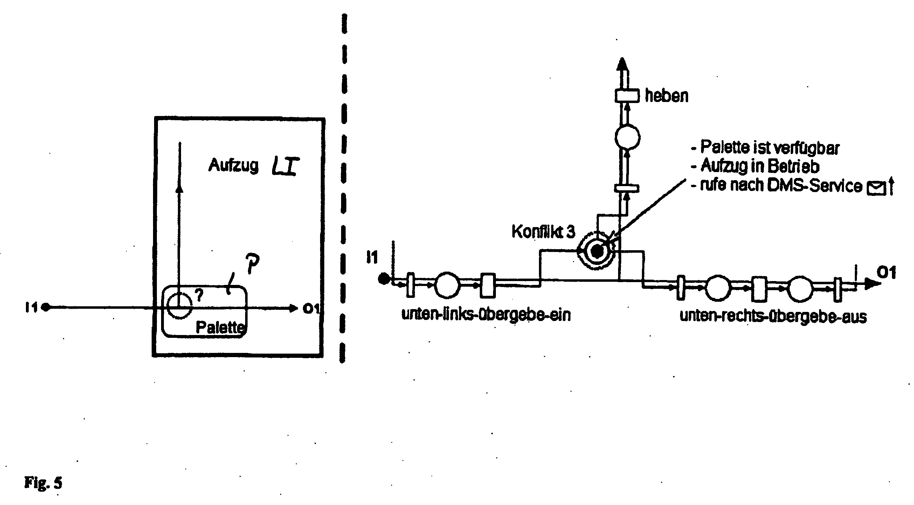

Beispielsweise fragt ein verbundenes Förderband den "bottom-left-transfer-in"- Service (II) an. In diesem Fall und wenn es ein dokumentiertes Ereignis in dem Steuerungsmodell ist, setzt das Gerät AG fort, um das System durch Anlauf des HLPN-Modells und Ausführung der zugehörigen Aktionen zu entwickeln. Nachdem der "bottom-left-transfer-in"-Service erfolgreich abgeschlossen ist, muss das System mit einem außengewöhnlichen Ereignis konfrontiert werden, welches durch einen Konflikt in dem Modell eingeworfen wurde (und zwar Konflikt 3, wie in Fig. 5 dargestellt). Wenn das Gerät AG nicht die notwendigen Informationen zur Entscheidung hat, muss es spezialisierte Komponenten DMS aufrufen, um in diesem Procedere zu helfen. Wie in Fig. 1 wird DMS für diesen Fall benutzt. Der Aufzug sendet eine Anfrage (Aufruf-Service) zur Unterstützung an die DMS, einschließlich Unterstützungsinformation (die ID der Palette und mögliche Ausgänge (Services, die aufgerufen werden können): "lift-up" und "bottom-right-transfer-out"). Basierend auf dem Arbeitsablauf der Palette wird eine Entscheidung in Form eines Ereignisses zu dem Aufzug zurückgesandt und nun sollte dieser imstande sein, den Konflikt zu lösen und das System zu entwickeln. Zum Beispiel empfängt der Aufzug Anregungen von dem DMS, einen "lift-up" auszuführen, so wird dieser fortfahren, einen "lift-up" auszuführen. In jedem Fall obliegt dem Aufzug LI die letzte Entscheidung der die empfangene Anregung bedenkt, jedoch unterschiedlich operieren kann im Falle von internen Situationen (z. B. Besetztsein des Aufzugs und/oder angeschlossener Förderbänder).

## Patentansprüche

1. Verfahren zum Betrieb von autonomen, kollaborativen Service-orientierten Automatisierungsgeräten (AG) eines Produktionssystems auf Fertigungsstätten-Ebene sowie als Teil eines IT-Untemehmenssystems mit service-orientierter Architektur, wobei die Automatisierungsgeräte (AG) mit Produktionsgeräten sowie untereinander gekoppelt sind und ihre Funktionalitäten und/oder die Funktionalitäten der angekoppelten Produktionsgeräte als Services oder Aggregation von Services anbieten, und/oder Services oder Aggregation von Services von Automatisierungsgeräten (AG) der Fertigungsstätte und/oder des IT-Unternehmenssystems anfragen, wobei ein Setup der Automatisierungsgeräte (AG) durchgeführt wird, umfassend eine Konfiguration, Definition von Services sowie Etablierunng von Verbindungen zu anderen Automatisierungsgeräten, wobei das Verhalten des Produktionssystems auf asynchronem Austausch von Ereignissen und Aufruf von Services basiert mit dem Ziel, ein Produkt nach einem Arbeitsplan herzustellen,
**dadurch gekennzeichnet,**
**dass** das Verhalten jedes Automatisierungsgerätes (AG) durch einen Teil einer Middleware-Hülle dargestellt wird, welche formal durch HLPN (High Level Petri Netz) -Modelle spezifiziert und durch interne und/oder externe Ereignisse und/oder Serviceaufrufen gesteuert wird, dass ein durch ein Automatisierungsgerät (AG) empfangenes Ereignis getestet wird, wobei dann, wenn das Ereignis mit einer Beschreibung eines aktuellen Status des HLPN-Modells korrespondiert, das Produktionssystem durch Updating des HLPN-Modells sowie Synchronisierung von Service-Aktivitäten in einen neuen Zustand überführt wird, wobei dann, wenn das Ereignis eine Ausnahme, ein undokumentiertes Ereignis oder ein interner Konflikt ist, eine Entscheidung derart getroffen wird, dass ein Ereignis generiert wird, wenn notwendige Informationen zur Lösung der Entscheidung vorliegen oder dass Services externer Komponenten (DMS) und/oder Automatisierungsgeräte (AG) angefragt werden, um Informationen für eine konkrete Entscheidung bereitzustellen und dass nach Ausführung des Ereignisses oder Anfrage der Services sowie Entwicklung des HLPN-Modells das Produktionssystem einen nächsten Status erreicht und zum Empfang weiterer Ereignisse bereit ist.

2. Verfahren nach Anspruch 1,
**dadurch gekennzeichnet,**
**dass** Zustandsänderung des Systems durch Updating/Aktualisierung des HLPN-Steuerungsmodells, Synchronisierung von Service-Aktivitäten, wie Interaktionen mit anderen Geräten wie "trage Palette", "nehme/greife", "schreib/lese zu Ein-/Ausgängen", "berichte Diagnose/Überwachungsindizes" durchgeführt wird.

3. Verfahren nach Anspruch 1 oder 2,
**dadurch gekennzeichnet,**
**dass** zur Behandlung von Ausnahmen, undokumentierter Ereignisse oder Konflikte Services eines entscheidungsfällenden Systems (DMS) abgefragt werden, um geeignete Informationen für eine korrekte Entscheidung bereitzustellen.

4. Verfahren nach zumindest einem der vorhergehenden Ansprüche,
**dadurch gekennzeichnet,**
**dass** die Serviceorientierung sowie die ereignisbasierende Zustandsänderung des HLPN-Modells des serviceorientierten Automatisierungsgerätes (AG) Regeln des "Token Game" eines High Level Petri-Netzes folgt.

5. Verfahren nach zumindest einem der vorhergehenden Ansprüche,
**dadurch gekennzeichnet,**
**dass** in jedes der Automatisierungsgeräte (AG) ein autonomes serviceorientiertes Steuerungsverhalten implementiert wird, welches basierend auf einer Layout-Konfiguration der Fertigungsstätte mit anderen Automatisierungsgeräten (AG) verbunden ist.

6. Verfahren nach zumindest einem der vorhergehenden Ansprüche,
**dadurch gekennzeichnet,**
**dass** die Middleware-Hülle die möglichen Verhaltensverbindungen basierend auf der Bereitstellung und/oder dem Aufruf von Services bereitstellt.

7. Verfahren nach zumindest einem der vorhergehenden Ansprüche,
**dadurch gekennzeichnet,**
**dass** Entscheidungsmechanismen, welche mit einem Verhalten von aggregierten Services assoziiert sind, von Informationen beeinflusst werden, die mit dem Produktionssystem, einschließlich der Fertigungsstätte und der Komponenten höheren Levels des serviceorientierten IT-Unternehmenssystems verbunden sind.

8. Verfahren nach zumindest einem der vorhergehenden Ansprüche,
**dadurch gekennzeichnet,**
**dass** das komplette Verhalten der Fertigungsstätte auf asynchronem Austausch von Ereignissen und Aufruf von Services basiert, welche durch die verteilten, autonomen serviceorientierten Automatisierungsgeräte ausgeführt werden und dass dieses Verhalten formal dem des HLPN-Modells folgt

## Claims

1. Process for operating autonomous, collaborative service-oriented automating devices (AG) of a production system at the manufacturing plant level as well as part of an IT company system with service-oriented architecture, whereby the automating devices (AG) are coupled to production devices as well as to each other and offer their functionalities and/or the functionalities of the coupled production devices as services or aggregation of services, and/or ask for services or aggregation of services from automating devices (AG) of the manufacturing plant and/or of the IT company system, whereby a setup of the automating devices (AG) is carried out comprising a configuration, definition of services and establishing of connections to other automating devices, whereby the behavior of the production system is based on the asynchronous exchange of events and the calling up of services with the goal of manufacturing a product according to a work plan,
**characterized in**
**that** the behavior of each automating device (AG) is represented by a part of a middleware envelope that is formally specified by HLPN (High Level Petri Net) models and is controlled by internal and/or external events and/or service call-ups, that an event received by an automating device (AG) is tested, whereby if the event corresponds to a description of a current status of the HLPN model the production system is transferred into a new status by updating the HLPN model as well as by synchronization of service activities, whereby if the event is an exception, an undocumented event or an internal conflict a decision is made in such a manner that an event is generated if necessary information for the solution of the decision is present, or that services of external components (DMS) and/or of automating devices (AG) are queried in order to make information for a concrete decision available, and that after execution of the event and/or querying of the services as well as development of the HLPN model the production system reaches a next status and is ready for receiving further events.

2. Process according to claim 1,
**characterized in**
**that** status change of the system is carried out by updating/refreshing the HLPN control model, synchronizing of service activities such as interactions with other devices such as "carry pallet", "take/grasp", "read/write to inputs/outputs", "report diagnosis/monitoring indexes."

3. Process according to claim 1 or 2,
**characterized in**
**that** in order to handle exceptions, undocumented events or conflicts services of a decision-making system (DMS) are queried in order to make suitable information available for a correct decision.

4. Process according to at least one of the preceding claims,
**characterized in**
**that** the service orientation as well as the event-based status change of the HLPN model of the service-oriented automating device (AG) follow rules of the "token game" of a high level Petri net.

5. Process according to at least one of the preceding claims,
**characterized in**
**that** an autonomous service-oriented control behavior is implemented in each of the automating devices (AG) which is connected to other automating devices (AG) based on a layout configuration of the manufacturing plant.

6. Process according to at least one of the preceding claims,
**characterized in**
**that** the middleware envelope makes the possible behavior connections available based on the making available and/or the call-up of services.

7. Process according to at least one of the preceding claims,
**characterized in**
**that** decision mechanisms associated with a behavior of aggregated services are influenced by information connected to the production system, including the manufacturing plant and the higher-level components of the service-oriented IT company system.

8. Process according to at least one of the preceding claims,
**characterized in**
**that** the complete behavior of the manufacturing plant is based on an asynchronous exchange of events and call-up of services that are carried out by the distributed, autonomous service-oriented automating devices, and that this behavior formally follows that of the HLPN model.

## Revendications

1. Procédé de fonctionnement d'appareils d'automatisation (AG) autonomes, coopératifs et orientés service d'un système de production au niveau des usines de fabrication ainsi qu'en tant que partie d'un système informatique d'entreprise doté d'une architecture orientée service, sachant que les appareils d'automatisation (AG) sont couplés à des appareils de production ainsi qu'entre eux et proposent leurs fonctionnalités et/ou les fonctionnalités des appareils de production couplés en tant que services ou agrégation de services, et/ou demandent des services et/ou des agrégations de services d'appareils d'automatisation (AG) des usines de fabrication et/ou du système informatique d'entreprise, qu'une installation des appareils d'automatisation (AG) est réalisée, comprenant une configuration, la définition de services ainsi que l'établissement de connexions vers d'autres appareils d'automatisation, et que le comportement du système de production est basé sur un échange asynchrone d'événements et l'appel de services dans l'objectif de fabriquer un produit selon un schéma opératoire,
**caractérisé en ce**
**que** le comportement de chaque appareil d'automatisation (AG) est représenté par une partie d'une enveloppe de logiciel médiateur qui est formellement spécifiée par des modèles HLPN (réseau de Petri de haut niveau) et commandée par des événements internes et/ou externes et/ou des appels de service, qu'un événement reçu par un appareil d'automatisation (AG) est testé, sachant que lorsque l'événement correspond à une description d'un statut actuel du modèle HLPN, le système de production est basculé sur un nouveau statut par mise à jour du modèle HLPN ainsi que par synchronisation d'activités de service, et sachant que lorsque l'événement est une exception, un événement non documenté ou un conflit interne, une décision est prise de telle façon qu'un événement est généré, si des informations nécessaires à la solution de la décision sont disponibles ou que des services de composants externes (DMS) et/ou d'appareils d'automatisation (AG) sont interrogés afin de mettre à disposition des informations pour une décision concrète, et qu'après exécution de l'événement ou de la demande des services ainsi que du développement du modèle HLPN, le système de production atteint un prochain statut et est prêt à recevoir d'autres événements.

2. Procédé selon la revendication 1,
**caractérisé en ce**
**que** le changement de statut du système est réalisé par mise à jour/actualisation du modèle de commande HLPN, par synchronisation d'activités de service, telles que des interactions avec d'autres appareils, comme « porte palette », « prends/saisis », « écris/lis aux entrées/sorties », « rapporte diagnostic/indices de surveillance ».

3. Procédé selon la revendication 1 ou 2,
**caractérisé en ce**
**que** pour gérer les exceptions, les événements non documentés ou les conflits, les services d'un système décisionnel (DMS) sont interrogés pour mettre à disposition des informations appropriées nécessaires à une décision correcte.

4. Procédé selon au moins l'une des revendications précédentes,
**caractérisé en ce**
**que** l'orientation service ainsi que le changement de statut, en fonction des événements, du modèle HLPN de l'appareil d'automatisation orienté service (AG) suivent les règles de franchissement (« Token game ») d'un réseau de Petri de haut niveau.

5. Procédé selon au moins l'une des revendications précédentes,
**caractérisé en ce**
**que** dans chacun des appareils d'automatisation (AG) est implanté un comportement de commande autonome et orienté service qui est connecté à d'autres appareils d'automatisation (AG) selon une configuration organisationnelle des usines de fabrication.

6. Procédé selon au moins l'une des revendications précédentes,
**caractérisé en ce**
**que** l'enveloppe de logiciel médiateur met à disposition les connexions de comportement possibles selon la mise à disposition et/ou l'appel de services.

7. Procédé selon au moins l'une des revendications précédentes, c a - ractérisé en ce
que des mécanismes décisionnels, qui sont associés à un comportement de services agrégés, sont influencés par des informations qui sont connectées au système de production, y compris aux usines de fabrication et aux composants de plus hauts niveaux du système informatique orienté service de l'entreprise.

8. Procédé selon au moins l'une des revendications précédentes, c a - ractérisé en ce
que le comportement complet des usines de fabrication est basé sur l'échange asynchrone d'événements et l'appel de services qui sont exécutés par les appareils d'automatisation répartis, autonomes et orientés service, et que ce comportement suit formellement celui du modèle HLPN.
